# EUROPÄISCHE PATENTSCHRIFT

(11) **EP 1 358 117 B1**
(45) Veröffentlichungstag und Bekanntmachung des Hinweises auf die Patenterteilung: **18.08.2004**
(21) Anmeldenummer: 02708325.2
(22) Anmeldetag: 02.02.2002
(51) Int. Cl.: B65G 1/04

(54) **VORRICHTUNG ZUR LAGERUNG UND ÜBERGABE VON WAREN IN KLEINGEBINDEN**
DEVICE FOR STORING AND TRANSFERRING PRODUCTS IN SMALL PACKETS
DISPOSITIF DE STOCKAGE ET DE TRANSFERT DE MARCHANDISES DANS DES PAQUETS DE PETITE TAILLE

(30) Priorität: 09.02.2001 DE 10105918
(43) Veröffentlichungstag der Anmeldung: 05.11.2003
(73) Patentinhaber: Fraunhofer-Gesellschaft zur Förderung der angewandten Forschung e.V., 80686 München (DE)
(72) Erfinder: JASPERS, Anke, 53498 Bad Breisig (DE); SIEBEL, Lars, 28211 Bremen (DE); SCHROER, Winfried, 44581 Gastrop-Rauxel (DE)
(74) Vertreter: Patentanwälte Meinke, Dabringhaus und Partner
(86) Internationale Anmeldenummer: PCT/EP2002/001081
(87) Internationale Veröffentlichungsnummer: WO 2002/064460

(56) Entgegenhaltungen:
- DE-A- 2 155 480
- FR-A- 1 570 432
- FR-A- 2 614 609
- US-A- 3 964 577
- US-A- 4 846 619
- US-A- 5 449 229

## Beschreibung

Die Erfindung richtet sich auf eine Vorrichtung zur Lagerung und Übergabe von Waren in Kleingebinden als in Verkehrsflächen aufzustellendes, selbständiges turmartiges Gebäude.

Es gibt unterschiedliche Systeme, Waren wenigstens zeitweise zu positionieren und den Zugriff für befugte Benutzer zu ermöglichen, wobei es dabei auch bekannt ist, z.B. Fächer gegenüber der Umgebungstemperatur unterschiedlicher Temperatur dem Benutzer anzubieten. Eine solche Anlage mit Kühleinrichtung zeigt beispielsweise die DE 196 39 696 in Art einer Schließfachanlage.

Eine automatische Schließfachanlage wird z.B. in dem Aufsatz "Fördertechnik 12/2000" vorgestellt, wobei die Schließanlage im Hauptbahnhof Köln einen Ein-/Ausgabe-Terminal aufweist für dort zu positionierende Gepäckstücke. Ein solches System ist konstruktiv aufwendig, da es auf vergleichsweise hohe Leistungen und Umschlagzahlen ausgelegt sein muß, um bei saisonbedingten Höchstbelastungen ausreichend Positionen zur Verfügung zu stellen.

Aus der DE 24 47 618 ist eine Einrichtung zur automatischen Ausgabe und/oder Aufgabe von Gegenständen etwa hängenden Kleidern an Kettenförderern in chemischen Reinigungen oder dgl. bekannt, wobei mittels vorderer und entsprechender Ansteuerungen das jeweilig gewünschte Produkt einer Ausgabeposition zuführbar ist. Eine im wesentlichen als Karussel gestaltete Vorrichtung zum Transport von in Regalen auf Schienen und Rollen angeordneten Schubfächern zeigt darüber hinaus die DE 32 23 426 U1, wobei ein entsprechendes zentral von Ablagepositionen umgebendes Bediengerät innerhalb der Vorrichtung vorgesehen ist.

Dank der Möglichkeit, beispielsweise Waren über elektronische Medien zu beziehen, erhöht sich der Warenumschlag, der mehr und mehr auch von privaten Verteilern wahrgenommen wird. Dabei kann es sinnvoll sein, etwa im Bereich einer Großstadt, eine Mehrzahl von Zwischenlagern einzurichten, wobei beispielsweise mittels größerer Fahrzeuge das Zwischenlager mit Waren bestückt wird, während es im Kleinverteilungsbereich zum Weitertransport zum Kunden kommt oder der Kunde sich am Zwischenlager die Ware selbst abholt. Als Beispiel sei hier das System "e-Commerce" genannt, Zwischenlager von Supermärkten, die Bestellungen zusammenstellen und dem Kunden zur Verfügung stellen, Buch-, Video-, CD- oder Spielwarenhandel od. dgl.

Bei herkömmlichen Schließfächern oder auch bei den oben bereits genannten gekühlten Fächern sind in der Regel Einund Ausgabe identisch, wobei es die Kapazität einschränkt, mehrere Fachpositionen bleiben solange leer, bis sie erneut bestückt werden.

Aufgabe der Erfindung ist die Schaffung einer Lösung, mit der ein kompaktes Zwischenlager an beliebiger Stelle, insbesondere im Bereich von allgemein zugänglichen Verkehrsflächen, wie Fußgängerzonen oder dgl., bereitgestellt werden kann, wobei die Position des Beschickens nicht zwingend mit der Entnahmeposition übereinstimmen muß.

Mit einer Vorrichtung der eingangs bezeichneten Art, wird diese Aufgabe durch die kennzeichnenden Merkmale des Anspruches 1 gelöst.

Durch die Ausgestaltung als Turm, insbesondere Rundturm, lassen sich auf kleinem Raum vergleichsweise große Lagerkapazitäten und ein Maximum an Entnahmeöffnungen erreichen, wobei sich Türme so errichten lassen, daß sie über einen großen Bereich ihres Umfanges erreichbar sind. So ist es mit dieser Bauweise auch in einfacher Weise möglich, die Beschickungsposition einerseits und die Entnahmeposition bzw. -positionen andererseits räumlich zu trennen, z.B. eine Beschickungsposition in einer Anlieferebene, während die Entnahmeposition z.B. von einer Fußgängerebene erreichbar ist, falls sich das System unmittelbar an den Endnutzer wendet. Die Turmbauweise macht es auch möglich, wenigstens einen vergleichsweise großen Bereich der Kapazität unter das Bodenniveau abzusenken, ohne daß zusätzliche Fläche dazu benötigt wird.

Dadurch, dass die Behälter mit einem blockierbaren Schubfach ausgebildet sind, läßt sich in der Verkehrsfläche mit vergleichsweise einfachen Mitteln, insbesondere Vandalismus, verhindern, auch läßt sich verhindern, dass Fachinhalte entnommen werden, die nicht für die entsprechenden Personen bestimmt sind.

Ausgestaltungen der Erfindung ergeben sich aus den Unteransprüchen. Dabei kann es besonders zweckmäßig sein, wenn jeder Behälter in einem die Entnahmeöffnung nach innen blockierenden Schubfach ausziehbar, aber nicht entnehmbar positioniert ist.

Ein besonderes Merkmal der Erfindung besteht darin, daß in der Entnahmeposition der jeweilige Behälter die Entnahmeöffnung derart blockiert, daß ein Zugriff zum Behälterinneren gewährleistet, ein Zugang zum Vorrichtungsinneren aber blockiert ist. Mit dieser Ausgestaltung ist gewährleistet, daß es nicht zu Vandalismus kommen kann, und daß insbesondere nicht der Zugriff zu Behältern ermöglicht wird, die nicht für den das Fach öffnenden Berechtigten bestimmt sind.

Dabei kann auch vorgesehen sein, daß jeder Behälter und/ oder das entsprechende Schubfach in der Entnahme- und Auszugposition kippbar angeordnet ist.

Beide oben genannten Merkmale dienen dem Zweck, eine möglichst komfortable Zugriffsmöglichkeit zum Behälterinneren zu ermöglichen, wobei mit dem Schubfachsystem eine technisch gut zu handhabende Blockiermöglichkeit gegeben ist, die verhindert, daß der Behälter unbefugt entnommen werden kann.

Eine weitere Schutzmöglichkeit kann erfindungsgemäß darin bestehen, daß jeder Behälter im Schubfach mit einem rechnergesteuerten, insbesondere zeitgeschalteten Rückholantrieb versehen ist, d.h., wird versehentlich oder absichtlich die Entnahmeöffnung mit ausgezogenem Behälter in dieser offenen Position belassen, wird beispielsweise über ein Zeitrelais ein Rückholmechanismus aktiviert, der das Schubfach und/oder den Behälter in das Vorrichtungsinnere zurückzieht und damit die Möglichkeit eröffnet, die zuvor blockierte Entnahmeöffnung wieder für dritte Nutzer zur Verfügung zu stellen.

Ein besonderer Vorteil der Erfindung besteht darin, daß wenigstens Bereiche des Turmes zur Lagerung von Objekten ausgebildet sind, die gegenüber der Umgebungstemperatur bestimmungsgemäß eine niedrigere oder höhere Temperatur aufweisen. So kann beispielsweise ein Kühlbereich im unter das Bodenniveau abgesenkten Bereich des Turmes vorgesehen sein, was zur Einsparung von Isolierung dient und die Tatsache ausnutzt, daß kalte Luft nach unten sinkt, so daß der untere Bereich des Turmes in einfacher Weise als Kühlzone gestaltet werden kann.

Umgekehrt können auch andere Bereiche als Tiefkühlzone oder auch, wenn dies gewünscht wird, als Heizzone ausgebildet sein, wobei letztere zweckmäßig einen vergleichsweise großen Abstand dann zu einer Kühlzone aufweist, wenn sich in der Vorrichtung auch beide Arten von Zonen befinden.

Am Umfang des Turmes können für den Endverbraucher eine Mehrzahl von Entnahmepositionen ausgebildet sein. In gleicher Weise kann die Zulieferzone so gestaltet sein, daß etwa über ein Rolltor eine Vielzahl von Beschickungsebenen und Beschickungsplätzen freigesetzt werden, die dann mit Ware ausgestattet werden können, wobei, wie oben schon erwähnt, die Entnahmezone eine andere Position aufweisen kann als die Füllzone.

Das Bedienungsgerät kann in unterschiedlicher Ausgestaltung in der Vorrichtung vorgesehen sein. Als Turmfördermittel kann es beispielsweise an einem zentrischen Mast angeordnet sein, der entweder selbst drehbar positioniert ist oder es erfolgt z.B. eine Drehung des Lastaufnahmemittels um den Antrieb oder auf der Spitze des Antriebes, wenn es sich beispielsweise um einen hydraulischen Hubzylinder handelt. Das Turmfördermittel kann als Portalfördermittel gestaltet sein u. dgl. mehr.

Weitere Merkmale, Einzelheiten und Vorteile der Erfindung ergeben sich aufgrund der nachfolgenden Beschreibung sowie anhand der Zeichnung. Diese zeigt in
- Fig. 1: eine vereinfachte räumliche Darstellung der Vorrichtung teilweise aufgeschnitten,
- Fig. 2: eine Aufsicht in vereinfachter Darstellung,
- Fig. 3: eine vereinfachte Darstellung im Ausschnitt an der Be- und Entladeposition sowie in
- Fig. 4: eine Detailansicht eines Schubfaches mit Beladehilfsmittel.

Die allgemein mit 1 bezeichnete Vorrichtung besteht im dargestellten Beispiel aus einem turmartigen Gebäude 2 mit einem unter das Handhabungsniveau 3 abgesenkten Bereich 4 und einem über das Niveau ragenden Bereich. Im Inneren des Turmes 2 sind eine Vielzahl von übereinanderliegenden, allgemein mit 5 bezeichnete Positionierebenen angeordnet, dies gilt auch für den unter dem Niveau liegenden Kellerbereich 4, wobei in den einzelnen Ebenen eine Vielzahl von Behältern, allgemein mit 6 bezeichnet, angeordnet sind bzw. positioniert werden können.

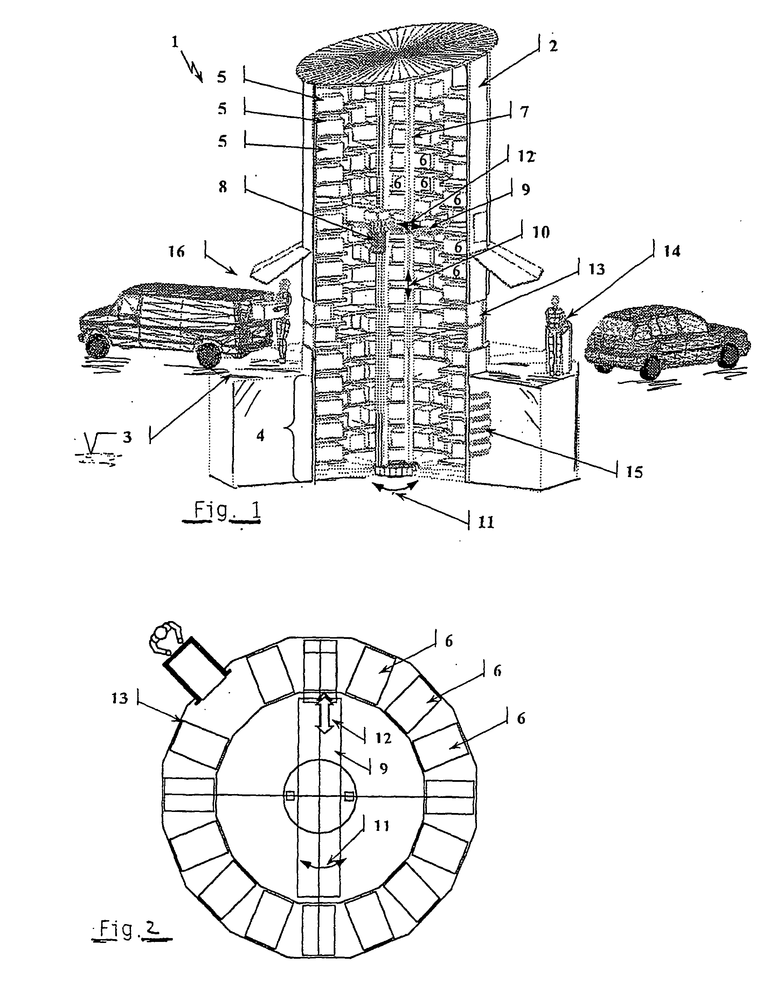

Zur Handhabung der Behälter 6 ist wenigstens ein zentrisches Fördermittel vorgesehen, im dargestellten Beispiel der Fig. 1 als Portalhebezeug 7 mit einer Antriebseinheit 8 und einem teleskopierbaren Fördermittel 9 ausgestaltet, wobei dieses Fördermittel auch anders gestaltet sein kann.

Um alle Positionen bedienen zu können, kann das Fördermittel gemäß Doppelpfeil nach oben und unten verfahren werden. Über beispielsweise einen Drehkranz am Boden und im Deckenbereich der Vorrichtung kann es sich drehen, was mit einem Doppelpfeil 11 angedeutet ist, wobei in einer Ebene das Lastaufnahmemittel teleskopierbar gestaltet ist, dies ist mit einem Doppelpfeil 12 in Fig. 1 angedeutet.

Zum Abruf eines Behälters 6 bzw. um an dessen Inhalt zu gelangen, sind Entnahmefenster 13 an wenigstens einer Seite des Turmes 2 angeordnet, wobei der Zugriff, z.B. über eine eigene persönliche Identifikationsnummer, über einen mit 14 bezeichneten Terminal möglich ist, der hier außerhalb der Vorrichtung 2 aus Darstellungsgründen wiedergegeben ist, er kann auch integraler Bestandteil der Vorrichtungsaußenwand sein oder in anderer Weise, z.B. über ein Handtelefon, abgerufen werden. Wird von einem Benutzer der Zugriff zu einem Fach gewünscht, gibt er seinen entsprechenden Code bzw. die Abrufnummer oder eine andere Identifikation ein, der ihm zuzuordnende Behälter 6 wird vor das Fenster 13 im Inneren des Turmes 2 positioniert, das Fenster 13 öffnet sich und der Zugriff ist möglich.

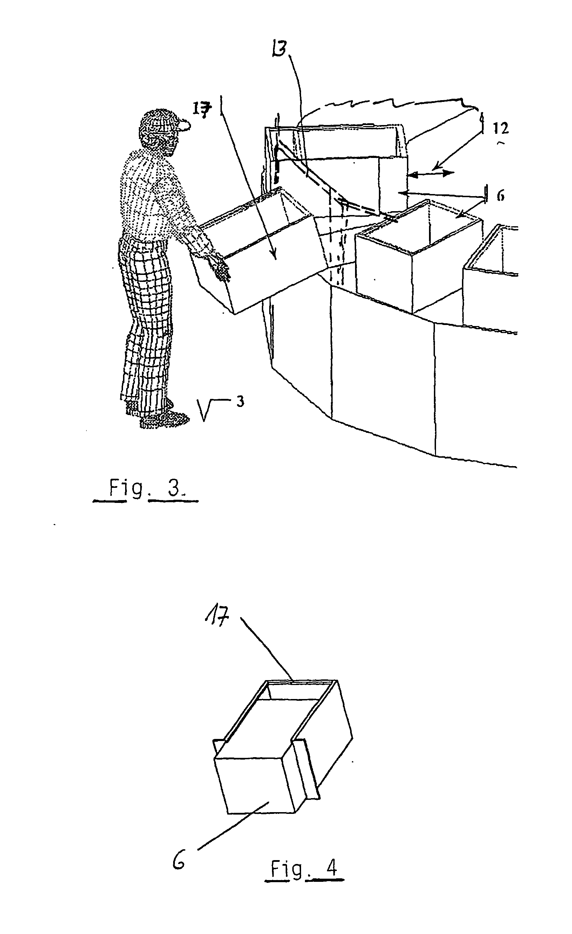

Dabei kann jeder Behälter in einer Art Schubfach 17 (Fig. 3) angeordnet sein. Über dieses Schubfach 17 ist es möglich, den Behälter bereichsweise aus dem Fenster 13 auszuziehen und ggf. abzukippen, um den Zugriff zum Behälterinneren zu erleichtern.

Um auch gekühlte Behälterpositionen im Inneren des Turmes 2 zu ermöglichen, kann beispielsweise der mit 4 bezeichnete untere Turmbereich mit einer Kühleinrichtung versehen sein, in Fig. 1 allgemein mit 15 bezeichnet und nur sehr schematisch wiedergegeben.

Die Anlieferungsposition ist mit 16 bezeichnet. Hier kann die Wand des Turmes 2 als Schiebetor ausgebildet sein, um ein gleichzeitiges Bestücken einer Vielzahl von Behältern durch einen Zulieferer zu ermöglichen.

Natürlich ist das beschriebene Ausführungsbeispiel der Erfindung noch in vielfacher Hinsicht abzuändern, ohne den Grundgedanken zu verlassen. So ist die Erfindung nicht zwingend auf den dargestellten querschnittlich runden Turm beschränkt, hier können auch andere Querschnittsformen vorgesehen sein, beispielsweise eine elliptische Querschnittsform mit z.B. zwei Regalförderern in den Brennpunkten der Ellipse oder einem entsprechend gesteuerten, unterschiedlich weit teleskopierbaren zentrischen Regalförderzeug, es können auch je nach Einbausituation wenigstens teilweise eckige Querschnittsformen vorgesehen sein u. dgl. mehr. Die Entnahmepositionen können z.B. bei unterschiedlichen zugriffsberechtigten Personenkreisen voneinander entsprechend getrennt sein, dies kann natürlich auch für die Beschickungspositionen gelten u. dgl. mehr.

## Patentansprüche

1. Vorrichtung zur Lagerung und Übergabe von Waren in Kleingebinden als in Verkehrsflächen aufzustellendes, selbständiges turmartiges Gebäude (2), wobei der Turm (2) eine Mehrzahl von übereinanderliegenden Positionierebenen (5) mit je einer Mehrzahl von Standplätzen für die Waren und/ oder für Waren aufnehmende Behälter (6) sowie ein jeden Standplatz erreichendes Bedienungsgerät (7) und wenigstens eine Zugriffsebene für einen sich im Verkehrsraum befindenden Benutzer aufweist,
**dadurch gekennzeichnet,**
**dass** wenigstens ein Terminal (14) vorgesehen ist, das dem Benutzer den Zugriff nach Eingabe eines Codes oder einer Abrufnummer oder einer anderen Identifikation zur Entnahme bzw. Entleerung eines für ihn bestimmten Behälters (6) und/oder des für ihn bestimmten Kleingebindes ermöglicht, wobei jede Entnahmeposition mit einer Öffnungs- und Schließeinrichtung versehen ist, die einen Zugriff zum an dieser Position befindlichen Behälter (6) und/oder zum Kleingebinde für dessen Entnahme ermöglicht bei gleichzeitiger Verhinderung des Zugriffes zum Behälterinneren oder zu anderen Entnahmepositionen.

2. Vorrichtung nach Anspruch 1,
**dadurch gekennzeichnet,**
**daß** jeder Behälter (6) in einem die Entnahmeöffnung nach innen blockierenden Schubfach ausziehbar, aber nicht entnehmbar positioniert ist.

3. Vorrichtung nach Anspruch 2,
**dadurch gekennzeichnet,**
**daß** jeder Behälter und/oder das entsprechende Schubfach in der Entnahme- und Auszugposition kippbar angeordnet ist.

4. Vorrichtung nach Anspruch 3,
**dadurch gekennzeichnet,**
**daß** jeder Behälter im Schubfach mit einem rechnergesteuerten, insbesondere zeitgeschalteten Rückholantrieb versehen ist.

5. Vorrichtung nach Anspruch 4,
**dadurch gekennzeichnet,**
**daß** die Vorrichtung (1) als querschnittlich runder Regalturm (2) mit zentrischem Regalbedienungsgerät (7) ausgebildet ist.

6. Vorrichtung nach einem der vorangehenden Ansprüche,
**dadurch gekennzeichnet,**
**daß** am Umfang des Turmes (2) für den Endverbraucher eine Mehrzahl von Entnahmepositionen (13) ausgebildet sind.

7. Vorrichtung nach einem der vorangehenden Ansprüche,
**dadurch gekennzeichnet,**
**daß** wenigstens Bereiche (4) des Turmes (2) zur Lagerung von Objekten ausgebildet sind, die gegenüber der Umgebungstemperatur bestimmungsgemäß eine niedrigere oder höhere Temperatur aufweisen.

8. Vorrichtung nach einem der vorangehenden Ansprüche,
**dadurch gekennzeichnet,**
**daß** wenigstens eine Zone des Turmes (2) als Heizzone, als Kühlzone (4) und/oder als Tiefkühlzone ausgebildet ist.

## Claims

1. Apparatus for storing and transferring products in small packets in the form of an independent tower-like structure (2) to be set up in traffic areas, wherein the tower (2) has a plurality of mutually superposed positioning levels (5) each with a respective plurality of positions for the products and/or for containers (6) for accommodating products, and an operating device (7) which reaches each product position, and at least one access level for a user who is in the traffic space,
**characterised in that**
there is provided at least one terminal (14) which permits access for the user after the input of a code or a call-up number or another identification for removal or emptying of a container (6) intended for him and/or of the small packet intended for him, wherein each removal position is provided with an opening and closing device which permits access to the container (6) disposed at said position and/or to the small packet for the removal thereof while at the same time preventing access to the container interior or to other removal positions.

2. Apparatus according to claim 1 **characterised in that** each container (6) is positioned in such a way that it can be pulled out but cannot be removed in a drawer which blocks the removal opening inwardly.

3. Apparatus according to claim 2 **characterised in that** each container and/or the corresponding drawer is arranged tiltably in the removal and pull-out position.

4. Apparatus according to claim 3 **characterised in that** each container is provided in the drawer with a computer-controlled and in particular time-switched retraction drive.

5. Apparatus according to claim 4 **characterised in that** the apparatus (1) is in the form of a shelf tower (2) of round cross-section having a central shelf operating device (7).

6. Apparatus according to one of the preceding claims **characterised in that** a plurality of removal positions (13) are provided at the periphery of the tower (2) for the end consumer.

7. Apparatus according to one of the preceding claims **characterised in that** at least regions (4) of the tower (2) are designed for the storage of objects which are at a lower or higher temperature in comparison with the ambient temperature according to their intended purpose.

8. Apparatus according to one of the preceding claims **characterised in that** at least one zone of the tower (2) is in the form of a heating zone, a cooling zone (4) and/or a freezer zone.

## Revendications

1. Dispositif de stockage et de transfert de marchandises dans des paquets de petite taille, en tant que bâtiment (2) indépendant en forme de tour, à installer sur des surfaces de circulation, sachant que la tour (2) comporte une pluralité de niveaux de positionnement (5) superposés avec chacun une pluralité d'emplacements pour les marchandises et/ou pour des conteneurs (6) accueillant des marchandises ainsi qu'un appareil de commande (7) atteignant chaque emplacement et au moins un niveau d'accès pour un utilisateur se trouvant dans l'espace de circulation, **caractérisé en ce qu'**au moins un terminal (14) est prévu et permet l'accès à l'utilisateur après saisie d'un code ou d'un numéro d'interrogation ou d'une autre identification pour retirer ou vider un conteneur (6) lui étant destiné et/ou le paquet de petite taille lui étant destiné, chaque position de retrait étant pourvue d'un dispositif d'ouverture et de fermeture, qui permet un accès au conteneur (6) se trouvant sur cet emplacement et/ou au paquet de petite taille pour son retrait en cas d'empêchement simultané de l'accès à l'intérieur du conteneur ou à d'autres positions de retrait.

2. Dispositif selon la revendication 1, **caractérisé en ce que** chaque conteneur (6) est positionné de manière coulissante mais pas retirable dans un tiroir bloquant vers l'intérieur l'ouverture de retrait.

3. Dispositif selon la revendication 2, **caractérisé en ce que** chaque conteneur et/ou le tiroir correspondant est disposé de manière basculante dans la position de retrait et de sortie.

4. Dispositif selon la revendication 3, **caractérisé en ce que** chaque conteneur dans le tiroir est pourvu d'un entraînement de rappel commandé par ordinateur, en particulier à minuterie.

5. Dispositif selon la revendication 4, **caractérisé en ce que** le dispositif (1) est réalisé comme tour à rayonnages (2) à section circulaire avec appareil central de distribution des rayonnages (7).

6. Dispositif selon l'une des revendications précédentes, **caractérisé en ce qu'**une pluralité de positions de retrait (13) est réalisée sur la circonférence de la tour (2) pour le consommateur final.

7. Dispositif selon l'une des revendications précédentes, **caractérisé en ce qu'**au moins des zones (4) de la tour (2) sont réalisées pour le stockage d'objets qui, conformément aux dispositions, comportent une température plus basse ou plus élevée par rapport à la température ambiante.

8. Dispositif selon l'une des revendications précédentes, **caractérisé en ce qu'**au moins une zone de la tour (2) est réalisée comme zone de chauffe, comme zone réfrigérante (4) et/ou comme zone de surgélation.
